# EUROPÄISCHE PATENTANMELDUNG

(11) **EP 4 099 167 A1**
(43) Veröffentlichungstag der Anmeldung: **07.12.2022**
(21) Anmeldenummer: 22172546.8
(22) Anmeldetag: 10.05.2022
(51) Int. Cl.: G06F 9/50

(54) **VERFAHREN ZUM ANSTEUERN EINER RECHENOPERATION UND VERFAHREN ZUM DURCHFÜHREN EINER RECHENOPERATION**

(30) Priorität: 31.05.2021 DE 102021113954
(71) Anmelder: Miele & Cie. KG, 33332 Gütersloh (DE)
(72) Erfinder: Lörcks, Sebastian, 59505 Bad Sassendorf (DE); Neumann, Richard, 32805 Hornbad-Meinberg (DE)

(57) **Zusammenfassung**

Die Erfindung betrifft ein Verfahren (200) zum Ansteuern einer Rechenoperation auf einem zu einem Haushaltgerät externen Gerät, wobei die Rechenoperation zum Ausführen eines für einen in dem Haushaltgerät durchzuführenden Algorithmus erforderlich ist. Dabei umfasst das Verfahren (200) einen Schritt (205) des Bereitstellens eines Rechensignals an eine Rechenschnittstelle des externen Geräts, wobei das Rechensignal vorbestimmte Parameter zum Durchführen der Rechenoperation repräsentiert. Zudem weist das Verfahren (200) einen Schritt (210) des Empfangens eines Ergebnissignals auf, das ein Ergebnis der auf dem externen Gerät durchgeführten Rechenoperation repräsentiert.

## Beschreibung

Die Erfindung betrifft ein Verfahren zum Ansteuern einer Rechenoperation und ein Verfahren zum Durchführen einer Rechenoperation.

Haushaltgeräte können zum Durchführen automatisierter Vorgänge digitalisiert sein. Wird eine große Rechenleistung ohne oder mit geringen Echtzeitanforderungen benötigt, zum Beispiel bei einer Speisenerkennung im Backofen, so wird die Berechnung beispielsweise in einer sogenannten Cloud durchgeführt. Bei Systemen, die eine hohe Rechenleistung benötigen und Echtzeitanforderungen gerecht werden müssen, wird im Allgemeinen ein entsprechender Prozessor, der ausreichend Rechenleistung zur Verfügung stellt, im Haushaltgerät verbaut.

Der Erfindung stellt sich die Aufgabe, ein verbessertes Verfahren zum Ansteuern einer Rechenoperation und ein verbessertes Verfahren zum Durchführen einer Rechenoperation zu schaffen.

Erfindungsgemäß wird diese Aufgabe durch ein Verfahren zum Ansteuern einer Rechenoperation und ein Verfahren zum Durchführen einer Rechenoperation mit den Merkmalen der Hauptansprüche gelöst. Vorteilhafte Ausgestaltungen und Weiterbildungen der Erfindung ergeben sich aus den nachfolgenden Unteransprüchen.

Die mit der Erfindung erreichbaren Vorteile bestehen neben der Erweiterung des Produktlebenszyklus eines Haushaltgeräts in einer Verbesserung des Datenschutzes. Zudem wird keine zusätzliche Hardware, wie beispielsweise ein spezieller Router, benötigt.

Es wird ein Verfahren zum Ansteuern einer Rechenoperation auf mindestens einem in Bezug auf ein Haushaltgerät externen Gerät vorgestellt, wobei die Rechenoperation zum Ausführen eines für einen in dem Haushaltgerät durchzuführenden Algorithmus erforderlich ist. Dabei umfasst das Verfahren einen Schritt des Bereitstellens eines Rechensignals an eine Rechenschnittstelle des mindestens einen externen Geräts, wobei das Rechensignal vorbestimmte Parameter zum Durchführen der Rechenoperation repräsentiert. Zudem weist das Verfahren einen Schritt des Empfangens eines Ergebnissignals auf, das ein Ergebnis der auf dem externen Gerät durchgeführten Rechenoperation repräsentiert. Bei dem Haushaltgerät kann es sich zum Beispiel um einen Kühlschrank, einen Backofen, eine Waschmaschine oder ein anderes in einem Haushalt einsetzbares Gerät handeln, das eine Vorrichtung zum automatisierten Durchführen verschiedener Prozesse umfasst. Beispielsweise kann ein Kühlschrank oder eine Spülmaschine eine Kamera zum Überwachen des Inhalts aufweisen oder eine Waschmaschine kann eine Dosiereinrichtung zum automatischen Dosieren von Waschmittel umfassen. Solche und ähnliche Vorgänge können von einer entsprechenden Vorrichtung des Haushaltgeräts gesteuert werden. Dabei können verschiedene Anwendungen eine sehr hohe Rechenleistung benötigen. Diese Rechenleistung kann teilweise kurzfristig, das heißt in Echtzeit, in vielen Fällen aber auch erst über den Tag verteilt benötigt werden. Hierbei kann es um Anwendungen gehen, welche mit künstlicher Intelligenz zu tun haben. Für derartige Anwendungen können spezielle leistungsstarke Chips mit einem Grafikprozessor (GPU) eingesetzt werden, die aber aufgrund ihres Kostenfaktors und ggf. der beschränkten Lebensdauer selten in Haushaltsgeräten oder anderen elektrischen Geräten des täglichen Lebens angewendet werden. Ein weiterer Hinderungsgrund für den Einsatz von GPU-beschleunigten Prozessoren kann die rasante Entwicklung dieser Prozessoren darstellen, da deren Produktlebenszyklus nicht den Produktlebenszyklen von Haushaltsgeräten entspricht. Produktlebenszyklen von Geräten werden durch die Lebensdauer und der Aktualität der verbauten Bauteile mitbestimmt. Mit einem steigendem Digitalisierungsgrad der Geräte kann es zu einer Situation kommen, bei der die Lebensdauer und Aktualität der Mikroprozessoren sich gravierend von der Lebensdauer des Gerätes unterscheidet. So kann ein handelsüblicher Backofen durchaus 20 Jahre in Betrieb bleiben. Hätte dieser jedoch zum Beispiel eine Produkterkennung mittels Kamera, die ohne eine Anbindung an eine sogenannte Cloud realisiert wäre, so könnte erwartet werden, dass die Produkterkennung innerhalb weniger Jahre nicht mehr aktuell sein kann. Mit dem hier vorgestellten Verfahren kann eine von dem Haushaltgerät benötigte Rechenoperation durchgeführt werden, ohne dabei einen entsprechend leistungsstarken Chip oder Prozessor in dem Haushaltgerät zu verbauen oder auf eine Cloud-Lösung zurückzugreifen. Stattdessen kann eine solche Rechenoperation auf ein externes Gerät ausgelagert werden, indem im Schritt des Bereitstellens ein der durchzuführenden Rechenoperation entsprechendes Rechensignal an das externe Gerät bereitgestellt wird. Nach der Durchführung der Rechenoperation wird im Schritt des Empfangens ein Ergebnissignal empfangen, das ein Ergebnis der durchgeführten Rechenaufgabe repräsentiert. Bei dem externen Gerät kann es sich zum Beispiel um ein Mobiltelefon, einen Laptop, einen Standcomputer, ein Tablett oder ein ähnliches Gerät handeln. Diese Geräte sind heutzutage in beinahe jedem Haushalt zu finden und bringen oft Prozessoren mit höherer Rechenleistung als in den üblichen Haushaltgeräten mit. Dabei kann die von den Geräten vorgehalten Rechenleistung während des Großteils der Zeit nicht oder nur zu einem geringen Teil genutzt werden. Durch eine Auslagerung der von dem Haushaltgerät benötigten Rechenleistung auf ein teilweise oder zeitweise ungenutztes externes Gerät kann vorteilhafterweise auf den Einbau eines kostspieligen Prozessors im Haushaltgerät oder die Anbindung des Haushaltgeräts an eine sogenannte Cloud verzichtet werden. Dadurch können Kosten eingespart, die Lebensdauer des Haushaltgeräts erhöht und eine, unter Umständen ständige, Internetverbindung der Haushaltgeräte vermieden werden. Auch beim Punkt Datenschutz erzielt die Erfindung eine Verbesserung, da keine privaten Daten eines Nutzers in eine Cloud gesendet werden müssen.

Gemäß einer Ausführungsform kann das Verfahren einen Schritt des Ausgebens eines Detektionssignals zum Detektieren des mindestens einen externen Geräts aufweisen, wobei im Schritt des Bereitstellens das Rechensignal ansprechend auf ein Kapazitätssignal an eines oder mehrere von mehreren Geräten bereitgestellt werden kann. Dabei kann das Kapazitätssignal ansprechend auf das Detektionssignal eingelesen werden. Benötigt zum Beispiel ein Haushaltgerät zusätzliche Rechenleistungen, dann kann mittels des Detektionssignals beispielsweise innerhalb eines Heimnetzwerks nach Komponenten, das heißt nach externen Geräten, gesucht werden, auf denen die Rechenoperation durchgeführt werden kann. Als Antwort auf das Detektionssignal kann ein solches externes Gerät ein Kapazitätssignal aussenden, das zum Beispiel die Verfügbarkeit des Geräts und zusätzlich oder alternativ dessen Kapazität repräsentiert. Ansprechend auf ein solches Kapazitätssignal kann im Schritt des Bereitstellens das Rechensignal bereitgestellt werden. Vorteilhafterweise kann dadurch das Vorhandensein verfügbarer externer Geräte und zusätzlich oder alternativ deren aktuelle Auslastung oder Kapazität ermittelt werden, bevor ein Rechensignal bereitgestellt wird.

Gemäß einer weiteren Ausführungsform kann im Schritt des Bereitstellens das Rechensignal bereitgestellt werden, wenn nach einer Prüfung das externe Gerät eine zum Durchführen der Rechenoperation aktuell verfügbare Rechenkapazität aufweist. Beispielsweise können in einem dem Schnitt des Bereitstellens vorangehenden Schritt des Ausgebens eines Detektionssignals verschiedene verfügbare externe Geräte detektiert werden. Entsprechend des Umfangs der Rechenoperation können die zur Verfügung stehenden Ressourcen miteinander verglichen und es kann eine Priorisierung erstellt werden. Wenn beispielsweise in einem Haushalt sowohl ein Smartphone als auch ein Standcomputer detektiert werden, wobei zum Beispiel der Standcomputer eine größere Kapazität oder eine stabilere Verbindung aufweist, dann kann das Rechensignal beispielsweise an eine Schnittstelle zu dem Standcomputer bereitgestellt werden. Vorteilhafterweise kann das Rechensignal somit jeweils an ein externes Gerät bereitgestellt werden, das für die Durchführung der Rechenoperation aktuell optimal geeignet ist, bzw. mehrere geeignete externe Geräte. Die von dem Gesamtsystem zur Verfügung gestellte Rechenleistung kann durch einen Anwender mit einem Hinzufügen von weiteren Komponenten erweitert werden.

Gemäß einer weiteren Ausführungsform kann ein Betriebsmodus und zusätzlich oder alternativ eine Aktion des Haushaltgeräts mittels der Rechenoperation steuerbar sein oder gesteuert werden und/oder wobei ein Algorithmus im Haushaltgerät unter Verwendung des Ergebnisses ausgeführt werden. Ein Beispiel für benötigte Rechenleistungen, die nicht in Echtzeit zur Verfügung stehen, kann eine Kühlschrankkamera, eine Spülmaschinenkamera oder eine Kamera in einem Backofen sein, die eine Erkennung durch Methoden der künstlichen Intelligenz auf dem Gerät durchführen kann. Das hierfür auf dem Haushaltgerät benötigte Modell zur Erkennung des Garguts oder Kühlschrankinhalts kann aber nicht auf dem Haushaltgerät selber erzeugt werden, wenn nicht genug Rechenkapazität zur Verfügung steht. Vorteilhafterweise kann ein solches Rechenmodell auf einem dafür geeigneten externen Gerät durchgeführt werden. Dadurch kann beispielsweise ein Backvorgang im Backofen überwacht werden oder ein Spülvorgang einer Spülmaschine kann einem aktuellen Beladungs- und Verschmutzungsgrad des Spülguts angepasst werden.

Gemäß einer weiteren Ausführungsform kann das Verfahren einen Schritt des Ausgebens eines Aktionssignals aufweisen, wobei das Aktionssignal unter Verwendung des Ergebnissignals ausgegeben werden kann, um einen Füllstand des Haushaltgeräts zu ändern und zusätzlich oder alternativ einen Betriebsparameter eines von dem Haushaltgerät durchzuführenden Prozesses zu ändern. Beispielsweise kann es sich bei dem Haushaltgerät um ein Kühlschrank handeln, dessen Inhalt mittels einer Kamera überwacht werden kann. Dabei kann infolge des Ergebnissignals zum Beispiel eine automatische Nachbestellung fehlender Produkte veranlasst werden. Vorteilhafterweise können dadurch verschiedene Abläufe und Parameter, die den individuellen Bedürfnissen eines Nutzers angepasst sein können, schnell und effizient reguliert werden.

Gemäß einer weiteren Ausführungsform kann im Schritt des Bereitstellens das Rechensignal drahtlos bereitgestellt und im Schritt des Empfangens kann das Ergebnissignal drahtlos empfangen werden. Beispielsweise kann es sich bei einer solchen Drahtlosverbindung um eine Verbindung mittels WLAN oder Bluetooth handeln. Dabei können zum Beispiel verschiedene externe Geräte innerhalb eines Haushalts drahtlos mit dem Haushaltgerät verbunden sein. Das hat den Vorteil, dass das genutzte Netzwerk einfach erweitert, beziehungsweise einzelne Komponenten leicht ausgetauscht werden können. Zudem kann zum Beispiel aus Gründen des Datenschutzes eine maximale Reichweite des Haushaltgeräts festgelegt werden.

Zudem wird ein Verfahren zum Durchführen einer Rechenoperation vorgestellt, die zum Ausführen eines für einen in einem Haushaltgerät durchzuführenden Algorithmus erforderlich ist, wobei das Verfahren auf mindestens einem in Bezug auf das Haushaltgerät externen Gerät durchgeführt wird. Dabei umfasst das Verfahren einen Schritt des Empfangens eines Rechensignals, wobei das Rechensignal vorbestimmte Parameter zum Durchführen der Rechenoperation repräsentiert. Zudem weist das Verfahren einen Schritt des Durchführens der Rechenoperation unter Verwendung des Rechensignals auf sowie einen Schritt des Bereitstellens eines Ergebnissignals an eine Ergebnisschnittstelle zu dem Haushaltgerät, wobei das Ergebnissignal ein Ergebnis der auf dem externen Gerät durchgeführten Rechenoperation repräsentiert. Bei dem externen Gerät kann es sich beispielsweise um ein Smartphone, einen Laptop, einen Standcomputer, ein Tablett oder ein ähnliches Gerät handeln, wobei auf dem externen Gerät zum Beispiel eine entsprechende App beziehungsweise ein Management-Programm zum Durchführen des Verfahrens installiert sein kann. Dadurch können vorteilhafterweise einem Haushaltgerät ungenutzte Rechenkapazitäten des externen Geräts zur Verfügung gestellt werden. Ein Nutzer kann zum Beispiel in dem verwendeten Programm einstellen, zu welchen Zeiten oder in welchem Maße das Gerät Rechenkapazitäten für andere Anwendungen zur Verfügung stellen soll. Vorteilhafterweise können dadurch leistungsintensive Rechenoperationen eines Haushaltgeräts auf dem externen Gerät durchgeführt werden, wobei alle Daten innerhalb eines Netzwerks innerhalb eines Haushalts bleiben und prozessiert werden. Ferner erwirbt ein signifikanter Anteil der Nutzer regelmäßig ein aktuelles Smartphone, obwohl das aktuell im Besitz befindliche Gerät noch voll funktionsfähig sein kann. Das gleiche gilt für weitere (mobile) Endgeräte, wie Tabletts, Laptops und so weiter. Die ungenutzten Rechenkapazitäten auf solchen Geräten können mit dem hier vorgestellten Verfahren verwendet werden, um rechenintensive Aufgaben der Haushaltgeräte im Heimnetzwerk zu erledigen, wobei vorteilhafterweise durch regelmäßigen Neuerwerb von Endgeräten die Aktualität der Prozessoren jeweils den aktualisierten Anforderungen der Haushaltgeräte entsprechen kann. Somit können auch für ein mehrere Jahre altes Hausgerät Berechnungen nach dem aktuellen Stand der Technik durchgeführt werden. Anders ausgedrückt kann die Lebensdauer des Haushaltgeräts erweitert werden, indem die Aktualität der Datenverarbeitungseinheit erweitert und zusätzlich oder alternativ angepasst werden kann.

Gemäß einer Ausführungsform kann im Schritt des Durchführens die Rechenoperation während einer vorbestimmten Zeitenspanne durchgeführt werden. Beispielsweise können für die Rechenoperation benötigte Rechenleistungen benutzerdefiniert nur bis zu einer maximalen Zeitspanne, zum Beispiel zwei Stunden pro Tag, oder zu bestimmten Uhrzeiten zur Verfügung gestellt werden, in denen das Gerät zum Beispiel nicht benutzt wird, beispielsweise über Nacht. So können vorteilhafterweise komplexe Rechenaufgaben ohne Echtzeitanforderung, zum Beispiel das Erstellen eines Al-Modells, erledigt werden, ohne andere auf dem externen Gerät durchgeführte Operationen zu behindern. Zudem kann ein Nutzer ein personalisiertes Modell erhalten, welches auf seine Bedürfnisse abgestimmt sein kann.

Gemäß einer weiteren Ausführungsform kann im Schritt des Durchführens die Rechenoperation bis zu einem vorbestimmten Leistungswert durchgeführt werden, insbesondere wobei der Leistungswert eine maximal für die Rechenoperation zu benutzende Rechenleistung auf dem externen Gerät repräsentiert. Die Rechenleistung des externen Geräts kann zum Beispiel jederzeit, aber nur bis zu einem von einem Nutzer einzustellenden Wert zur Verfügung gestellt werden. So kann zum Beispiel eine Erkennung, deren Ergebnis in Echtzeit benötigt wird, auf einer oder mehreren Recheneinheiten im Hintergrund durchgeführt werden. Vorteilhafterweise kann dadurch die Rechenleistung eines externen Geräts optimal genutzt werden.

Gemäß einer weiteren Ausführungsform kann in einem Schritt des Unterdrückens eine Ausgabe von Daten außerhalb eines vordefinierten Netzwerks unterdrückt werden. Ein solches Netzwerk kann zum Beispiel von einem Nutzer definiert werden, indem beispielsweise nur bestimmte im Haushalt vorhandene Geräte miteinander verbunden werden. Das hat den Vorteil, dass einerseits von einem Nutzer individuell bestimmt werden kann, welche Ressourcen für die Durchführung einer Rechenoperation zur Verfügung gestellt werden, wodurch ein Zugriff Unbefugter verhindert werden kann. Andererseits kann hierdurch der Datenschutz gewahrt werden, da keine persönlichen Daten zum Beispiel mittels einer Internetverbindung in eine Cloud ausgelagert werden. Insbesondere da eine entsprechende Cloudlösung von einem Gerätehersteller über den gesamten Produktlebenszyklus zur Verfügung gestellt werden müsste, können auch an dieser Stelle zusätzliche Kosten für den Betrieb einer Cloud eingespart werden, da die Rechenleistung lokal durch den Endanwender zur Verfügung gestellt wird.

Gemäß einer weiteren Ausführungsform kann das Verfahren einen Schritt des Ausgebens eines Kapazitätssignals umfassen, wobei das Kapazitätssignal ansprechend auf ein empfangenes Detektionssignal ausgegeben werden kann und wobei das Kapazitätssignal eine Verfügbarkeit des externen Geräts und zusätzlich oder alternativ eine aktuell verfügbare Rechenkapazität repräsentieren kann. Benötigt zum Beispiel ein Haushaltgerät zusätzliche Rechenkapazitäten, so kann innerhalb des Netzwerks nach anderen Geräten gesucht werden, die Rechenkapazitäten zur Verfügung stellen können. Findet das Haushaltgerät ein oder mehrere passende Geräte, welche einen Teil oder auch die gesamte Rechenaufgabe übernehmen können, so wird die Aufgabe ausgelagert. Somit können in einem Netzwerk mehrere externe Geräte vorhanden sein, die über unterschiedliche Kapazitäten verfügen können. Mittels des Kapazitätssignals kann extensiv ausgewählt werden, welche Kapazitäten aktuell verfügbar sind und über eine für die Rechenoperation benötigte Rechenkapazität verfügen. Vorteilhafterweise kann dadurch die Verteilung der Rechenoperationen innerhalb eines Netzwerks entsprechend der auf den einzelnen Geräten zur Verfügung stehenden Kapazitäten optimiert werden.

Auch wenn der beschriebene Ansatz anhand eines Haushaltgeräts beschrieben wird, kann das hier beschrieben Verfahren entsprechend im Zusammenhang mit einem gewerblichen oder professionellen Gerät, beispielsweise einem medizinischen Gerät, eingesetzt werden.

Der hier vorgestellte Ansatz schafft ferner eine Vorrichtung, die ausgebildet ist, um die Schritte einer Variante eines der hier vorgestellten Verfahren in entsprechenden Einrichtungen durchzuführen, anzusteuern bzw. umzusetzen. Auch durch diese Ausführungsvariante der Erfindung in Form einer Vorrichtung kann die der Erfindung zugrundeliegende Aufgabe schnell und effizient gelöst werden.

Die Vorrichtung kann ausgebildet sein, um Eingangssignale einzulesen und unter Verwendung der Eingangssignale Ausgangssignale zu bestimmen und bereitzustellen. Ein Eingangssignal kann beispielsweise ein über eine Eingangsschnittstelle der Vorrichtung einlesbares Sensorsignal darstellen. Ein Ausgangssignal kann ein Steuersignal oder ein Datensignal darstellen, das an einer Ausgangsschnittstelle der Vorrichtung bereitgestellt werden kann. Die Vorrichtung kann ausgebildet sein, um die Ausgangssignale unter Verwendung einer in Hardware oder Software umgesetzten Verarbeitungsvorschrift zu bestimmen. Beispielsweise kann die Vorrichtung dazu eine Logikschaltung, einen integrierten Schaltkreis oder ein Softwaremodul umfassen und beispielsweise als ein diskretes Bauelement realisiert sein oder von einem diskreten Bauelement umfasst sein.

Von Vorteil ist auch ein Computer-Programmprodukt oder Computerprogramm mit Programmcode, der auf einem maschinenlesbaren Träger oder Speichermedium wie einem Halbleiterspeicher, einem Festplattenspeicher oder einem optischen Speicher gespeichert sein kann. Wird das Programmprodukt oder Programm auf einem Computer oder einer Vorrichtung ausgeführt, so kann das Programmprodukt oder Programm zur Durchführung, Umsetzung und/oder Ansteuerung der Schritte des Verfahrens nach einer der vorstehend beschriebenen Ausführungsformen verwendet werden.

Ein Ausführungsbeispiel der Erfindung ist in den Zeichnungen rein schematisch dargestellt und wird nachfolgend näher beschrieben. Es zeigt
- Figur 1: eine schematische Darstellung eines Ausführungsbeispiels eines Netzwerks;
- Figur 2: ein Ablaufdiagramm eines Ausführungsbeispiels eines Verfahrens zum Ansteuern einer Rechenoperation auf einem zu einem Haushaltgerät externen Gerät;
- Figur 3: ein Ablaufdiagramm eines Ausführungsbeispiels eines Verfahrens zum Ansteuern einer Rechenoperation auf einem zu einem Haushaltgerät externen Gerät;
- Figur 4: ein Ablaufdiagramm eines Ausführungsbeispiels eines Verfahrens zum Durchführen einer Rechenoperation; und
- Figur 5: ein Ablaufdiagramm eines Ausführungsbeispiels eines Verfahrens zum Durchführen einer Rechenoperation.

In der nachfolgenden Beschreibung günstiger Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

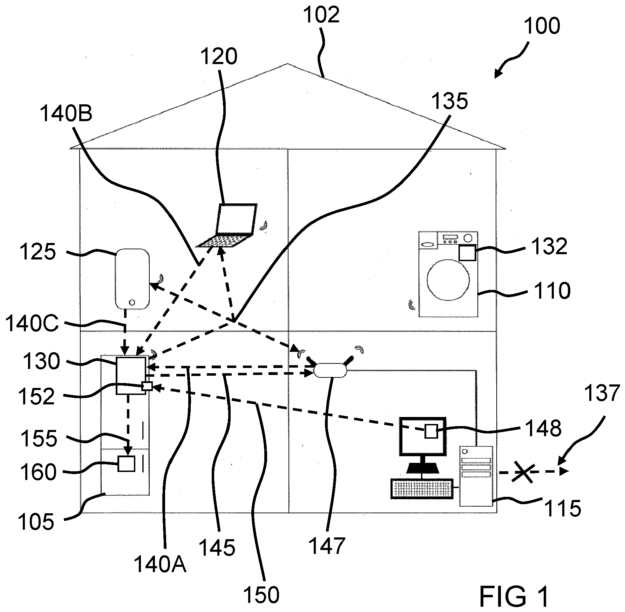

Figur 1 zeigt eine schematische Darstellung eines Ausführungsbeispiels eines Netzwerks 100 in einem Haushalt 102. Innerhalb dieses Netzwerks 100 sind ein Haushaltgerät 105, bei dem es sich lediglich beispielhaft um einen Kühlschrank handelt, und ein weiteres Haushaltgerät 110, bei dem es sich lediglich beispielhaft um eine Waschmaschine handelt, mit einem externen Gerät 115 vernetzt, bei denen es sich lediglich beispielhaft um einen Standcomputer handelt, sowie mit einem weiteren externen Gerät 120 und einem zusätzlichen externen Gerät 125. In diesem Ausführungsbeispiel sind die Haushaltgeräte 105,110 drahtlos mit den externen Geräten 115,120,125 verbunden. In einem anderen Ausführungsbeispiel kann eine solche Verbindung auch als Kabelverbindungen realisiert sein. Dabei weist in diesem Ausführungsbeispiel das Haushaltgerät 105 eine Vorrichtung 130 auf und das weitere Haushaltgerät 110 weist eine weitere Vorrichtung 132 auf, die jeweils ausgebildet sind, um ein Verfahren zum Ansteuern einer Rechenoperation auf einem externen Gerät 115, 120, 125 durchzuführen. Hierfür ist die Vorrichtung 130 lediglich beispielhaft ausgebildet, um ein Detektionssignal 135 zum Detektieren von externen Geräten innerhalb des Netzwerks 100 auszugeben. Damit innerhalb des Netzwerks 100 verwendete Daten das Netzwerk 100 nicht verlassen und keine Abhängigkeit zu einer Cloud besteht, findet zugleich ein Unterdrücken 137 eines Ausgebens von Signalen an Geräte außerhalb des Netzwerks 100 statt. Ansprechend auf das Detektionssignal 135 ist das externe Geräte 115 in diesem Ausführungsbeispiel ausgebildet, um ein Kapazitätssignal 140A bereitzustellen. Gleichermaßen ist das weitere externe Gerät 120 ausgebildet, um ein weiteres Kapazitätssignal 140B bereitzustellen und das zusätzliche externe Gerät 125 ist ausgebildet, um ein zusätzliches Kapazitätssignal 140C bereitzustellen. Lediglich beispielhaft repräsentieren die Kapazitätssignale 140A, 140B und 140C jeweils eine Verfügbarkeit der externen Geräte 115, 120, 125 sowie eine auf den externen Geräten 115, 120, 125 jeweils verfügbare Rechenkapazität. In einem anderen Ausführungsbeispiel kann das Kapazitätssignal ausschließlich das Vorhandensein eines externen Geräts im Netzwerk oder ausschließlich eine verfügbare Rechenkapazität repräsentieren. In diesem Ausführungsbeispiel ist ansprechend auf das Kapazitätssignal 140A ein Rechensignal 145 von der Vorrichtung 130 an eine Rechenschnittstelle 147 zu dem externen Gerät 115 bereitstellbar. Dabei repräsentiert das Rechensignal 145 vorbestimmte Parameter zum Durchführen der Rechenoperation, die in der hier gezeigten Darstellung lediglich beispielhaft aufgrund der passenden Rechenkapazität auf dem Standcomputer durchführbar ist. In einem anderen Ausführungsbeispiel kann das Rechensignal auch an das weitere externe Gerät oder an das zusätzliche externe Gerät oder zeitgleich an mehrere externe Geräte bereitgestellt werden. Das Rechensignal 145 ist in diesem Ausführungsbeispiel von dem externen Gerät 115 empfangbar und die Rechenoperation ist unter Verwendung des Rechensignals 145 auf diesem externen Gerät 115 durchführbar. Hierfür ist lediglich beispielhaft eine App 148 zur Verbindungsaufnahme mit der Vorrichtung 130 und zum Durchführen der Rechenoperation auf dem Standcomputer 115 installiert. Mittels der App 148 ist das externe Gerät 115 ausgebildet, um anschließend an das Durchführen der Rechenoperation ein Ergebnissignal 150 an eine Ergebnisschnittstelle 152 zu dem Haushaltgerät 105 bereitzustellen, wobei das Ergebnissignal 150 ein Ergebnis der durchgeführten Rechenoperation repräsentiert. Mit anderen Worten führt die verfügbare Ressource die Berechnung durch und gibt das Ergebnis zurück an das Haushaltgerät 105. Wenn in einem alternativen Ausführungsbeispiel mehrere Ressourcen Ergebnisse melden, kann das Haushaltgerät ausgebildet sein, um die Ergebnisse zusammenzufügen. In diesem Ausführungsbeispiel ist die Vorrichtung 130 des Haushaltgeräts 105 lediglich beispielhaft ausgebildet, um unter Verwendung des Ergebnissignals 152 ein Aktionssignal 155 an eine Aktionseinrichtung 160 des Haushaltgeräts 105 auszugeben. Dabei ist die Aktionseinrichtung 160 lediglich beispielhaft ausgebildet, um einen Füllstand des Haushaltgeräts 105 zu ändern und beispielhaft ein fehlendes Produkt nachzubestellen.

In einem anderen Ausführungsbeispiel kann für Anwendungen, die hohe Rechenleistungen ohne Echtzeitanforderungen benötigen, eine sogenannte Cloud zum Einsatz kommen. Die oft hohen Kosten für den Betrieb der Cloud können vom Gerätehersteller gegenfinanziert werden. In einem solchen Ausführungsbeispiel können die Haushaltgeräte ausgebildet sein, um eine ständige Internetverbindung aufrechtzuerhalten und unter anderem private Daten aus dem Heimnetzwerk in die Cloud auszulagern. In einem alternativen Ausführungsbeispiel kann ein möglichst großer Teil der Rechenleistung auf dem Gerät (on the edge) durchführbar sein. In einem solchen Ausführungsbeispiel können verschiedene Anwendungen auf bestimmte Werte hin optimiert sein und nur für ein sehr eingeschränktes Einsatzspektrum funktionieren beziehungsweise keinen oder nur geringen Spielraum für Erweiterungen bieten.

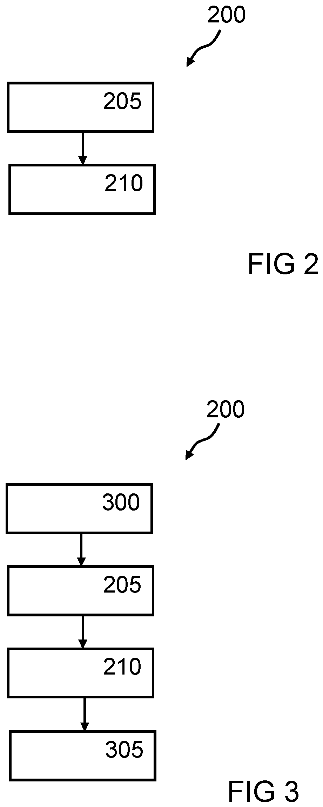

Figur 2 zeigt ein Ablaufdiagramm eines Ausführungsbeispiels eines Verfahren 200 zum Ansteuern einer Rechenoperation auf einem in Bezug auf ein Haushaltgerät externen Gerät. Das hier dargestellte Verfahren 200 ist beispielhaft innerhalb eines Netzwerks, wie es in der vorangegangenen Figur beschrieben wurde, durchführbar. Das Verfahren 200 umfasst einen Schritt 205 des Bereitstellens eines Rechensignals an eine Rechenschnittstelle des externen Geräts, wobei das Rechensignal vorbestimmte Parameter zum Durchführen der Rechenoperation repräsentiert. Dabei ist die Rechenoperation zum Ausführen eines für einen in dem Haushaltgerät durchzuführenden Algorithmus erforderlich, der lediglich beispielhaft zum Erfassen eines Kühlschrankinhalts mittels einer Kühlschrankkamera in einer entsprechenden Vorrichtung des Haushaltgeräts hinterlegt ist. In einem anderen Ausführungsbeispiel kann der Algorithmus auch beispielsweise zum Erkennen von Gargut in einem Backofen oder dem Erfassen eines Waschgangs in einer Waschmaschine angewendet werden. Zudem weist das Verfahren 200 einen Schritt 210 des Empfangens eines Ergebnissignals auf, das ein Ergebnis der auf dem externen Gerät durchgeführten Rechenoperation repräsentiert. In diesem Ausführungsbeispiel entspricht dieses Ergebnis lediglich beispielhaft dem von der Kühlschrankkamera erfassen Kühlschrankinhalt.

Figur 3 zeigt ein Ablaufdiagramm eines Ausführungsbeispiels eines Verfahren 200 zum Ansteuern einer Rechenoperation auf einem zu einem Haushaltgerät externen Gerät. Das hier dargestellte Verfahren 200 entspricht oder ähnelt dem in der vorangegangenen Figur beschriebenen Verfahren, mit dem Unterschied, dass das hier dargestellte Verfahren 200 zusätzliche Schritte umfasst. So weist das Verfahren 200 in diesem Ausführungsbeispiel vor dem Schritt 205 des Bereitstellens eines Rechensignals einen Schritt 300 des Ausgebens eines Detektionssignals zum Detektieren des externen Geräts auf. Dabei wird im Schritt 205 des Bereitstellens das Rechensignal ansprechend auf ein Kapazitätssignal an eines von mehreren Geräten bereitgestellt, wobei das Kapazitätssignal ansprechend auf das Detektionssignal eingelesen wird. Das Detektionssignal wird in diesem Ausführungsbeispiel an eines von mehreren Geräten bereitgestellt, wenn nach einer Prüfung das externe Gerät eine zum Durchführen der Rechenoperation aktuell verfügbare Rechenkapazität aufweist. Mit anderen Worten definiert das Haushaltgerät eine Aufgabe, die ausgelagert werden soll. Anschließend sucht das Haushaltgerät im Heimnetzwerk nach Komponenten, die Rechenleistung zur Verfügung stellen. Das Haushaltgerät vergleicht die zur Verfügung stehenden Ressourcen und erstellt eine Priorisierung. Anschließend übergibt das Haushaltgerät die Aufgabe an die für die Rechenoperation passende Ressource. Eine Gesamtaufgabe kann auch in mehrere kleine (Teil-) Aufgaben geteilt werden und an mehrere Ressourcen übertragen werden. In diesem Ausführungsbeispiel umfass das Verfahren 200 zudem einen Schritt 305 des Ausgebens eines Aktionssignals nach dem Schritt 210 des Empfangens eines Ergebnissignals. Dabei wird das Aktionssignal unter Verwendung des Ergebnissignals ausgegeben, um lediglich beispielhaft einen Füllstand des Haushaltgeräts zu ändern. In einem anderen Ausführungsbeispiel kann ansprechend auf das Aktionssignal auch ein Betriebsparameter eines von dem Haushaltgerät durchzuführenden Prozesses geändert werden.

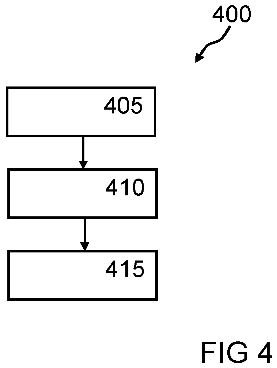

Figur 4 zeigt ein Ablaufdiagramm eines Ausführungsbeispiels eines Verfahren 400 zum Durchführen einer Rechenoperation, die zum Ausführen eines für einen in einem Haushaltgerät durchzuführenden Algorithmus erforderlich ist, wobei das Verfahren 400 auf einem zu dem Haushaltgerät externen Gerät durchgeführt. Das hier dargestellte Verfahren 400 ist beispielhaft innerhalb eines Netzwerks, wie es in der vorangegangenen Figur 1 beschrieben wurde, durchführbar. Das Verfahren 400 umfasst einen Schritt 405 des Empfangens eines Rechensignals, wobei das Rechensignal vorbestimmte Parameter zum Durchführen der Rechenoperation repräsentiert. Das Rechensignal kann beispielhaft in einem Schritt des Bereitstellens eines Verfahrens zum Ansteuern einer Rechenoperation, wie es in den vorangegangenen Figuren 1 und 2 beschrieben wurde, bereitgestellt werden. Zudem weist das Verfahren 400 einen Schritt 410 des Durchführens der Rechenoperation unter Verwendung des Rechensignals auf, wobei lediglich beispielhaft die Rechenoperation während einer vorbestimmten Zeitenspanne, beispielhaft zwischen 22 Uhr abends und 5 Uhr morgens, durchgeführt wird. Auf den Schritt 410 des Durchführens der Rechenoperation folgt ein Schritt 415 des Bereitstellens eines Ergebnissignals an eine Ergebnisschnittstelle zu dem Haushaltgerät, wobei das Ergebnissignal ein Ergebnis der auf dem externen Gerät durchgeführten Rechenoperation repräsentiert.

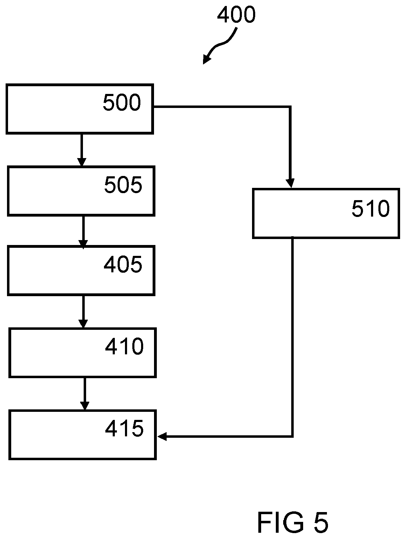

Figur 5 zeigt ein Ablaufdiagramm eines Ausführungsbeispiels eines Verfahren 400 zum Durchführen einer Rechenoperation. Das hier dargestellte Verfahren 400 entspricht oder ähnelt dem in der vorangegangenen Figur 4 beschriebenen Verfahren, wobei das hier dargestellte Verfahren 400 zusätzliche Schritte umfasst. So sind in diesem Ausführungsbeispiel dem Schritt 405 des Empfangens eines Rechensignals ein Schritt 500 des Empfangens eines Detektionssignals sowie ein Schritt 505 des Ausgebens eines Kapazitätssignals vorangestellt. Dabei repräsentiert das Kapazitätssignal lediglich beispielhaft sowohl eine Verfügbarkeit des externen Geräts innerhalb des Netzwerks als auch eine aktuell verfügbare Rechenkapazität, die der durchzuführenden Rechenoperation entspricht. In diesem Ausführungsbeispiel wird zudem im Schritt 410 des Durchführens die Rechenoperation bis zu einem vorbestimmten Leistungswert durchgeführt. Entsprechend wird die Rechenoperation, bei der es sich lediglich beispielhaft um das Erkennen eines Kühlschrankinhalts handelt, auf einer verfügbaren Recheneinheit im Hintergrund durchgeführt. Lediglich beispielhaft umfasst das Verfahren 400 in diesem Ausführungsbeispiel auch einen Schritt 510 des Unterdrückens, in dem eine Ausgabe von Daten außerhalb eines vordefinierten Netzwerks unterdrückt wird. Dabei erfolgt der Schritt 510 des Unterdrückens lediglich beispielhaft parallel zu den übrigen Schritten 500, 505, 405, 410, 415 des Verfahrens 400. Anders ausgedrückt wird in diesem Ausführungsbeispiel über die gesamte Dauer des Verfahrens 400 hinweg eine Ausgabe von Daten an Geräte außerhalb des Netzwerks unterdrückt, um die verwendeten Daten zu schützen.

Mit anderen Worten ist ein Kern der hier dargestellten Verfahren 200 und 400, dass alle Daten innerhalb des Netzwerkes innerhalb des Haushalts bleiben und prozessiert werden. Auf allen Geräten, deren ungenutzte Rechenkapazitäten zur Verfügung gestellt werden, wird ein entsprechendes Management-Programm beziehungsweise eine App installiert. Der Nutzer kann in diesem Programm einstellen, zu welchen Zeiten oder in welchem Maße das Gerät Rechenkapazitäten für andere Anwendungen zur Verfügung stellt. Benötigt nun zum Beispiel ein Haushaltgerät zusätzliche Rechenkapazitäten, so wird innerhalb des Netzwerks nach anderen Geräten gesucht, die Rechenkapazitäten zur Verfügung stellen. Findet das Haushaltgerät ein oder mehrere passende Geräte, welche einen Teil oder auch die gesamte Rechenaufgabe übernehmen können, so wird die Aufgabe ausgelagert. Die Steuerung der Rechenaufgaben wird von dem Gerät übernommen, dass auch das Ergebnis der Berechnung benötigt. Somit können in einem Netzwerk mehrere Steuereinheiten vorhanden sein. Grundsätzlich ist die Rechenleistung von den Recheneinheiten in zwei verschiedenen Modi bereitstellbar. In einem Ausführungsbeispiel wird die Rechenleistung zu bestimmten Zeiten zur Verfügung gestellt, in denen das Gerät nicht benutzt wird, zum Beispiel über Nacht. In einem alternativen Ausführungsbeispiel wird Rechenleistung jederzeit, aber nur bis zu einem einzustellenden Wert zur Verfügung gestellt. Durch die Beschränkung der Datenverarbeitung auf ein definiertes Netzwerk ist es dem Endnutzer möglich, einen dem Haushaltgerät zugeordneten Service auch in dem Fall weiter zu nutzen, dass ein Cloudbetreiber seinen Dienst einstellt, da er selber die notwendige Infrastruktur bereitstellt. Der Betrieb und der Produktlebenszyklus des Haushaltsgerätes sind nach dem Kauf somit nicht mehr von anderen Akteuren abhängig.

## Patentansprüche

1. Verfahren (200) zum Ansteuern einer Rechenoperation auf einem zu einem Haushaltgerät (105) externen Gerät (115), wobei die Rechenoperation zum Ausführen eines für einen in dem Haushaltgerät (105) durchzuführenden Algorithmus erforderlich ist, wobei das Verfahren (200) folgende Schritte aufweist:
Bereitstellen (205) eines Rechensignals (145) an eine Rechenschnittstelle (147) des externen Geräts (115), wobei das Rechensignal (145) vorbestimmte Parameter zum Durchführen der Rechenoperation repräsentiert; und
Empfangen (210) eines Ergebnissignals (150), das ein Ergebnis der auf dem externen Gerät (115) durchgeführten Rechenoperation repräsentiert.

2. Verfahren (200) gemäß Anspruch 1, mit einem Schritt (300) des Ausgebens eines Detektionssignals (135) zum Detektieren des externen Geräts (115), wobei im Schritt (205) des Bereitstellens das Rechensignal (145) ansprechend auf ein Kapazitätssignal (140) an eines von mehreren Geräten (115, 120, 125) bereitgestellt wird, wobei das Kapazitätssignal (140) ansprechend auf das Detektionssignal (135) eingelesen wird.

3. Verfahren (200) gemäß einem der vorangegangenen Ansprüche, wobei im Schritt (205) des Bereitstellens das Rechensignal (145) bereitgestellt wird, wenn nach einer Prüfung das externe Gerät (115) eine zum Durchführen der Rechenoperation aktuell verfügbare Rechenkapazität aufweist.

4. Verfahren (200) gemäß einem der vorangegangenen Ansprüche, wobei ein Betriebsmodus und/oder eine Aktion des Haushaltgeräts (105) mittels der Rechenoperation steuerbar ist oder gesteuert wird und/oder wobei ein Algorithmus im Haushaltgerät (105) unter Verwendung des Ergebnisses ausgeführt wird.

5. Verfahren (200) gemäß einem der vorangegangenen Ansprüche, mit einem Schritt (305) des Ausgebens eines Aktionssignals (155), wobei das Aktionssignal (155) unter Verwendung des Ergebnissignals (150) ausgegeben wird, um einen Füllstand des Haushaltgeräts (105) zu ändern und/oder einen Betriebsparameter eines von dem Haushaltgerät (105) durchzuführenden Prozesses zu ändern.

6. Verfahren (200) gemäß einem der vorangegangenen Ansprüche, wobei im Schritt (205) des Bereitstellens das Rechensignal (145) drahtlos bereitgestellt und im Schritt (210) des Empfangens das Ergebnissignal (150) drahtlos empfangen wird.

7. Verfahren (400) zum Durchführen einer Rechenoperation, die zum Ausführen eines für einen in einem Haushaltgerät (105) durchzuführenden Algorithmus erforderlich ist, wobei das Verfahren (400) auf einem zu dem Haushaltgerät (105) externen Gerät (115) durchgeführt wird und folgende Schritte aufweist:
Empfangen (405) eines Rechensignals (145), wobei das Rechensignal (145) vorbestimmte Parameter zum Durchführen der Rechenoperation repräsentiert;
Durchführen (410) der Rechenoperation unter Verwendung des Rechensignals (145); und
Bereitstellen (415) eines Ergebnissignals (150) an eine Ergebnisschnittstelle (152) zu dem Haushaltgerät (105), wobei das Ergebnissignal (150) ein Ergebnis der auf dem externen Gerät (115) durchgeführten Rechenoperation repräsentiert.

8. Verfahren (400) gemäß Anspruch 7, wobei im Schritt (410) des Durchführens die Rechenoperation während einer vorbestimmten Zeitenspanne durchgeführt wird.

9. Verfahren (400) gemäß einem der Ansprüche 7 oder 8, wobei im Schritt (410) des Durchführens die Rechenoperation bis zu einem vorbestimmten Leistungswert durchgeführt wird, insbesondere wobei der Leistungswert eine maximal für die Rechenoperation zu benutzende Rechenleistung auf dem externen Gerät (115) repräsentiert.

10. Verfahren (400) gemäß einem der Ansprüche 7 bis 9, wobei in einem Schritt (510) des Unterdrückens eine Ausgabe von Daten außerhalb eines vordefinierten Netzwerks (100) unterdrückt wird.

11. Verfahren (400) gemäß einem der Ansprüche 7 bis 10, mit einem Schritt (505) des Ausgebens eines Kapazitätssignals (140), wobei das Kapazitätssignal (140) ansprechend auf ein empfangenes Detektionssignal (135) ausgegeben wird und wobei das Kapazitätssignal (140) eine Verfügbarkeit des externen Geräts (115) und/oder eine aktuell verfügbare Rechenkapazität repräsentiert.

12. Vorrichtung (130), die ausgebildet ist, um die Schritte eines der Verfahren (200; 400) gemäß einem der vorangegangenen Ansprüche 1 bis 6 oder gemäß einem der Ansprüche 7 bis 11 in entsprechenden Einheiten auszuführen.

13. Computer-Programmprodukt mit Programmcode zur Durchführung eines Verfahrens (200; 400) nach einem der Ansprüche 1 bis 6 oder nach einem der Ansprüche 7 bis 11, wenn das Computer-Programmprodukt auf einer Vorrichtung (130) ausgeführt wird.

14. Maschinenlesbares Speichermedium, auf dem das Computerprogramm nach Anspruch 13 gespeichert ist.
